# EUROPÄISCHE PATENTANMELDUNG

(11) **EP 0 981 235 A2**
(43) Veröffentlichungstag der Anmeldung: **23.02.2000**
(21) Anmeldenummer: 99660115.9
(22) Anmeldetag: 24.06.1999
(51) Int. Cl.: H04M 3/42, H04M 3/54

(54) **Verfahren und Signal zur übermittlung von infomation in einem Telefonnetz**

(30) Priorität: 24.06.1998 FI 981455
(71) Anmelder: Helsingin Puhelin OYJ - Helsingfors Telefon ABP, 00130 Helsinki (FI)
(72) Erfinder: Peltola, Hannu, 02780 Espoo (FI); Jakola, Janne, 04200 Kerava (FI); Kasari, Vesa, 04310 Tuusula (FI)
(74) Vertreter: Hovi, Simo

(57) **Zusammenfassung**

In dieser Publikation ist ein Verfahren zum Übermitteln von Zusatzinformation in einem Telefonnetz im Zusammenhang mit einer bei einem Anruf zu übertragenden Signalgabemeldung beschrieben, wobei die Information in mindestens einem Signalgabefeld der Signalgabemeldung gespeichert wird und die Signalgabemeldung im Zusammenhang mit der Rufschaltung an das gerufene Endgerät gesendet wird. Erfindungsgemäß wird die Zusatzinformation in mindestens einem Signalgabefeld der Signalgabemeldung so gespeichert, daß zumindest das erste Zeichen des Zusatzinformationsteils ein in der Übertragung von konventionell zu übertragender Information im aktuellen Signalgabefeld unbenutztes Zeichen ist. In der Publikation ist auch ein in der Signalgabe des Telefonnetzes verwendbares Signal beschrieben.

## Beschreibung

Gegenstand der Erfindung ist ein Verfahren gemäß dem Oberbegriff des Patentanspruchs 1.

Solche Verfahren werden in Telefonnetzen zum Übermitteln von mit einem Anruf verknüpfter Information aus dem Telefonnetz an das angewählte oder das den Anruf entgegennehmende Endgerät eingesetzt. Die Information wird hauptsächlich bei der Schaltung des Anruft übermittelt.

Gegenstand der Erfindung ist auch ein Signal gemäß Patentanspruch 9.

Solche Signale werden zum Übermitteln von Information, die im Zusammenhang von Verfahren oben beschriebener Art gesendet werden soll, eingesetzt. Die von dem Signal getragene Information kann z.B. die mit einem Anruf verknüpfte A- oder B-Teilnehmernummerinformation sein.

Gemäß vorbekannter Technik hat ein internes Telefonnetz, in dieser Publikation Unternehmensnetz oder Telefoninternnetzsystem genannt, von Einheiten, die interne Telefonnetze benötigen, wie z.B. Unternehmen oder Behörden, entweder mittels fester Point-to-Point-Verbindungen oder mittels über das öffentliche Telefonnetz steuerbare Verbindungen realisiert werden können. Bei der Realisierung des Unternehmensnetzes durch Benutzung von Verbindungen des öffentlichen Telefonnetzes ist die Übertragung von mit den Anrufen verknüpften peripheren Daten zwischen den zum Unternehmensnetz gehörenden Endgeräten stets ein Problem gewesen. Viele Funktionen eines Endgerätes eines Unternehmensnetzes, zum Beispiel einer Nebenstellenanlage, stehen nur innerhalb der Nebenstellenanlage oder des Nebenstellennetzes zur Verfügung, nicht jedoch in jenem Teil des Unternehmensnetzes, das über das öffentliche Telefonnetz funktioniert. Dies kommt daher, daß innerhalb der Nebenstellenanlage oder des Nebenstellennetzes das jeweilige Protokoll des Gerätelieferanten zum Einsatz kommt, das diese Dienste realisiert.

Läuft der Anruf über das öffentliche Telefonnetz, wird jedoch das Protokoll des Telefonnetzes befolgt. Viele dieser Funktionen, die die Nebenstellenanlage unterstützt, sind solche, die im öffentlichen Telefonnetz nicht zwischen den Engeräten definiert sind. Aufder anderen Seite läuft im öffentlichen Telefonnetz viel mehr Information über den Anruf, als was vom Netz zum Endgerät übermittelt werden kann. Dies kommt daher, daß in den Empfehlungen des öffentlichen Telefonnetzes die Signalisierung zwischen dem Endgerät und dem Netz die Übertragung dieser Informationen über diese Schnittstelle hinaus nicht unterstützt.

Zum Beispiel ist bei der Rückführung des Anrufs von einem Nebenanschluß an die Vermittlungsstelle, wenn der Nebenanschluß besetzt ist, für die Vermittlungsstelle des Nebenstellennetzes in der Regel ersichtlich, von wo der Anruf rückgeführt, wer der ursprüngliche Anrufer sowie was die Ursache für die Rückführung des Anrufs ist. Wenn der Anruf über das öffentliche Telefonnetz an die Vermittlungsstelle zurückkommt, siebt die Vermittlungsstelle gegebenenfalls die Nummer des ursprünglichen Anrufers sowie die Nummer, von welcher der Anruf rückgeführt ist. Jedoch werden zum Beispiel Informationen über die Ursache, warum der Anruf an die Vermittlungsstelle gegangen ist, in der Signalisierung nach den Empfehlungen des öffentlichen Telefonnetzes über diese Schnittstelle nicht übertragen. Diese Information ist jedoch in vielen Fällen im Telefonnetz in der Signalgabe zwischen den Zentralen des Netzes übertragen worden.

Ein Mangel der vorbekannten Technik liegt darin, daß in über das öffentliche Telefonnetz funktionierenden Telefoninternnetzsystemen oder in Teilen des Systems keine mit dem Anruf verknüpfte Zusatzinformation, z.B. eine Ursacheninformation, an das rufentgegennehmende Endgerät übertragen werden kann. Der Begriff Ursacheninformation bezeichnet die Information darüber, warum der Anruf an das aktuelle Endgerät gesteuert worden ist. Ursachen können z.B. sein, daß der Anschluß des ursprünglichen B-Teilnehmers besetzt ist, Rufweiterschaltung von dem ursprünglichen B-Teilnehmer oder dess der ursprüngliche B-Teilnehmer nicht antwortet.

Ziel der Erfindung ist es, die oben beschriebenen Mängel zu beseitigen und ein Verfahren sowie ein Signal völlig neuen Typs zur Übermittlung von Information im Telefonnetz zu schaffen.

Die Erfindung basiert darauf, daß die Zentrale des Telefoninternnetzsystems, die die Anrufe steuert, die mit dem Anruf verknüpfte und im öffentlichen Telefonnetz benutzte Zusatzinformation in ein solches Format umändert, daß sie dem Endgerät durch den Gebrauch der normalen Signalgabe des öffentlichen Telefonnetzes übermittelt werden kann. Dies kann z.B. durch Zuweisen der Zusatzinformation, wie z.B. der Ursacheninformation, getrennt mittels eines gewählten Trennsymbols, in ein auch sonst benutztes Signalgabefeld geschehen, z.B. in das A- oder B-Teilnehmernummernfeld. Die Zusatzinformation kann aus dem Signalgabefeld in dem rufentgegennehmenden Endgerät abgerufen werden.

Das erfindungsgemäße Verfahren ist genauer gesagt dadurch gekennzeichnet, was im kennzeichnenden Teil des Patentanspruchs 1 angegeben ist. Das erfindungsgemäße Signal seinerseits ist dadurch gekennzeichnet, was im kennzeichnenden Teil des Patentanspruchs 9 angegeben ist.

Durch die Erfindung werden erhebliche Vorteile erzielt.

Die Erfindung ermöglicht die Übermittlung von mit einem Anruf verknüpfter Zusatzinformation in über das öffentliche Telefonnetz funktionierenden Telefoninternnetzsystemen oder in Teilen eines Systems an ein rufentgegennehmendes Endgerät.

Dies kann beispielsweise so angewandt werden, daß, wenn der Anrufüber das öffentliche Telefonnetz an die Vermittlungsstelle rückgeführt wird, der Vermittlungsstelle die Ursacheninformation der Anrufsteuerung mitgeteilt werden kann, d.h. die Information darüber, warum der Anruf an die Vermittlungsstelle rückgeführt werden ist. Weiters kann die Erfindung auch in anderen entsprechenden Situationen angewandt werden, in welchen in der Kommunikation zwischen dem Endgerät und dem öffentlichen Telefonnetz mehr Information einbegriffen werden soll, als in den allgemeinen Empfehlungen oder in der allgemeinen Praxis in der Signalgabe definiert ist.

Die Erfindung wird im folgenden mittels Beispiele und unter Bezugnahme auf die beigefügte Zeichnung näher erläutert.

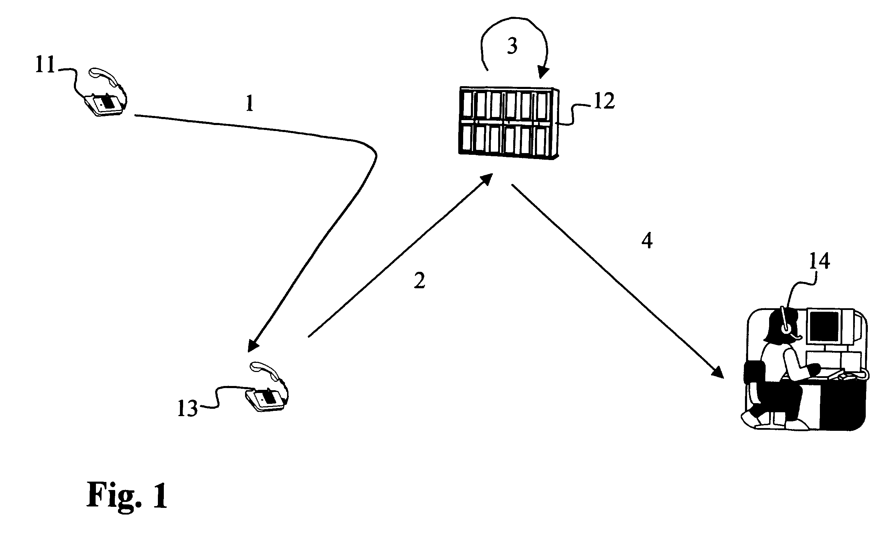

Figur 1 zeigt die Steuerung eines Anrufs in einem Telefoninternnetzsystem unter Verwendung eines erfindungsgemäßen Verfahrens.

In dieser Publikation wird der Anrufer, der versucht hat, eine Verbindung herzustellen, A-Teilnehmer genannt, und das Ziel, das der A-Teilnehmer in erster Linie zu erreichen versuchte, wird B-Teilnehmer genannt. Die Vorrichtung oder das Programm, das den Anruf im öffentlichen Telefonnetz beherrscht, wird hingegen Steuerungszentrale genannt. Die Steuerungszentrale kann zum Beispiel eine Telefonzentrale, die Steuerungszentrale eines intelligenten Netzes, ein Peripheriegerät eines intelligenten Netzes oder eine sonstige für den entsprechenden Zweck geeignete Vorrichtung sein. Die Vorrichtung, die an das öffentliche Telefonnetz gekoppelt ist und an welche die Steuerungszentrale den Anruf steuert, wird Endgerät genannt. Die Person, die Vorrichtung oder das Anwenderprogramm, wohin der Anruf gesteuert wird und die oder das den Anruf bearbeitet, wird in dieser Publikation Vermittlungsstelle genannt.

Im folgenden wird die Anwendung des erfindungsgemäßen Verfahrens unter Bezugnahme auf Figur 1 beschrieben, in welcher der A-Teilnehmer 11, die Steuerungszentrale 12 des Telefoninternnetzsystems, der B-Teilnehmer 13 sowie das Endgerät 14, die durch das öffentliche Telefonnetz miteinander verbunden werden können, an dem Geschehen teilnehmen.

Unter Anwendung des erfindungsgemäßen Verfahrens nach Figur 1 werden folgende Maßnahmen ergriffen:
1) Der A-Teilnehmer 11 ruft den B-Teilnehmer 13 an, dessen Anschluß besetzt ist.
2) Da die B-Teilnehmernummer besetzt ist, wird der Anruf an die Steuerungszentrale 12 umgeleitet.
3) Die Steuerungszentrale ändert das Format der vom Telefonnetz benutzten Information in eine solche Form, die die Endgeräte 13, 14 des Telefoninternnetzsystems oder zumindest das Endgerät der Vermittlungsstelle 14 verstehen. Das Endgerät muß dieses Format interpretieren und in die eigene Sprache oder in eine Sprache, die der Benutzer des Geräts, beispielsweise die Vermittlungsstelle 14 für den Anruf, oder die Anwendung verstehen, übertragen können.
4) Die Steuerungszentrale 12 schaltet den Anrufweiter an die Vermittlungsstelle 14. Bei der Schaltung des Anrufs teilt die Steuerungszentrale 12 der Vermittlungsstelle 14 die ursprüngliche A-Teilnehmernummer und die B-Teilnehmernummer mit, von wo der Anruf umgeleitet worden ist, weiters auch die Ursacheninformation, d.h. die Information darüber, warum der Anruf umgeleitet worden ist. In diesem Fall wird die Ursacheninformation Teilnehmer-besetzt-Information genannt.

In dieser Erfindung wird ein Verfahren benutzt, wobei die Ursacheninformation mit einem sog. Ursachenschlüssel ausgedrückt wird. Sollen andere Informationen übermittelt werden, werden die gewünschten Fälle mit entsprechenden anderen Fallschlüsseln angegeben. Verschiedene Fälle erhalten eigene Schlüssel in einer solchen Form, daß sie in der für das Telefonnetz und das Endgerät verständlichen Signalisierung des öffentlichen Netzes einbegriffen werden können. Das durch die Signalisierung des Telefonnetzes zu übermittelnde Format kann z.B. so geschaffen werden, daß der Ursachenschlüssel oder ein anderer Fallschlüssel von der anderen zu übermittelnden Information durch Benutzen bestimmter Separatoren getrennt wird, die angeben, daß in dieser Signalgabe ein bestimmtes in einem bestimmten Feld nach dem Separator auftretendes Zeichen einen bestimmten Sachverhalt darstellt. Im Prinzip kann auch eine Mehrzahl verschiedener Separatoren benutzt werden, wobei der Ursachenschlüssel direkt auf den Separatortyp verschlüsselt werden kann. Im folgenden ist eine Lösungsvariante für die Anwendung eines Ursachenschlüssels beschrieben.

Als Separator wird ein anderes Zeichen als eine Ganzzahl gewählt, zum Beispiel ein Buchstabe. In einigen Netzlösungen sind zum Beispiel die Buchstaben E und D zu diesem Zweck am besten geeignet. In diesem Beispiel wird der Gebrauch des Buchstabens E als Separator gewählt. Das Auftreten dieses Buchstabens in einem bestimmten Feld der Signalgabe trennt den Ursachenschlüssel von der anderen Information, die in diesem Feld übermittelt wird. Das Zeichen nach dem Buchstaben, z.B. eine Zahl, drückt aus, um was für einen Ursachenschlüssel es sich handelt. Dabei können die im Feld vorgesehenen und von dem Separator und dem Ursachenschlüssel gebildeten Schlüssel z.B. folgendes bedeuten: E1 = Anschluß besetzt, E2 = Anrufnicht angenommen, E3 = Mobiltelefon nicht ans Netz angeschlossen, E4 = Mobiltelefon ausgeschaltet, usw.

Dieser Ursachenschlüssel kann leicht im öffentlichen Telefonnetz zum Beispiel in jenem Feld der Signalgabe einbegriffen werden, in welchem die gewünschte Nummer angezeigt wird, mit der der Anruf im Netz verbunden werden soll, d.h. das sog. B-Teilnehmernummernfeld. Dabei brauchen in vielen Netzsystemen die Bestimmungen des eigentlichen Telefonnetzes gar nicht unbedingt verändert zu werden. Im derzeitigen Netzmodell können im B-Teilnehmernummernfeld auch derartige Buchstabenzeichen dabei sein, ohne daß dies die Rufschaltung beeinflußt. Weiters wird die Information des B-Teilnehmernummernfeldes in zeitgemäßen Netzen auch an das Endgerät übermittelt. Das B-Teilnehmernummernfeld ist in vielen Fällen eine günstige Wahl zur Übermittlung von Zusatzinformationsachlüsseln, aber es können durchaus auch andere Felder zur Benutzung gewählt werden. Wird ein solches Feld benutzt, das Buchstabenzeichen als im Feld normalerweise zu übermittelnde Information enthält, können solche Buchstabenzeichen natürlich nicht als Separator zwischen normaler Information und Zusatzinformationsschlüssel benutzt werden. Dann ist nach einem solchen Separatorzeichen zu suchen, das bei normaler Datenübertragung nicht auftaucht, oder die Zusatzinformationsschlüssel sind in einem anderen vom Telefonnetz an das Endgerät zu übermittelnden Feld anzuordnen.

Das erfindungsgemäße Signal kann also unter Anwendung des B-Teilnehmernummernfeldes zur Übermittlung von Zusatzinformation gebildet werden z.B. derart, daß im B-Teilnehmernummernfeld die B-Teilnehmernummer normal angezeigt und dahinter der Separator und der Ursachenschlüssel gesetzt wird. Der Inhalt des B-Teilnehmernummernfeldes könnte also z.B. 096061E1 sein, wobei 09 6061 die B-Teilnehmernummer ist, E der benutzte Separator und 1 der zu übermittelnde Fallschlüssel. In der rufentgegennehmenden Vorrichtung wird E1 in eine Sprache verwandelt, die für die Vorrichtung oder den Benutzer der Vorrichtung, wie z.B. die Vermittlungsstelle 14, verständlich ist. Die Vorrichtung, das von derselben benutzte Anwenderprogramm oder die Datenbank muß dabei die Bedeutungen der benutzten Ursachenschlüssel gespeichert enthalten. Bekommt die Vorrichtung zum Beispiel einen Ruf aus dem Telefonnetz, wobei im B-Teilnehmernummernfeld nach der B-Teilnehmernummer die Zeichen E1 stehen, steuert die Vorrichtung den Anruf an die Vermittlungsstelle 14 und zeigt die Information auf dem von der Vermittlungsstelle 14 benutzten Display an, daß der Anruf an die Vermittlungsstelle 14 weitergeleitet worden ist, da die ursprünglich gerufene Nummer, die also ebenfalls an die Vermittlungsstelle 14 übermittelt worden ist, beim Schalten des Anrufs besetzt war.

Mit anderen Worten, das erfindungsgemäße Signal, das in der Signalgabe des Telefonnetzes benutzt wird und an ein mit dem Telefonnetz verbundenes Endgerät übermittelt werden soll, umfaßt ein Zeichen, das in mindestens einem Signalgabefeld gespeichert, in der Signalgabe mindestens eines solchen Telefonnetzes benutzt wird und so gewählt ist, daß es ein anderes ist als das Zeichen, das bei der Übertragung von konventionell zu übertragender Information in dem aktuellen Signalgabefeld gemäß der Signalgabepraxis des Telefonnetzes benutzt wird.

Das erfindungsgemäße Verfahren seinerseits kann als Verfahren zur Übermittlung von Zusatzinformation in einem Telefonnetz im Zusammenhang mit einer bei einem Anruf zu übermittelnden Signalgabemeldung definiert werden. In einem solchen Verfahren
- wird der Signalgabemeldung in mindestens einem Signalgabefeld Information gespeichert,
- wird der Signalgabemeldung in mindestens einem Signalgabefeld derart Zusatzinformation gespeichert, daß mindestens das erste Zeichen des Zusatzinformationsteils in dem aktuellen Signalgabefeld ein in der Übertragung von konventionell zu übertragender Information ein unbenutztes Zeichen ist, und
- wird die Signalgabemeldung zur Interpretation im Zusammenhang mit dem Schalten des Anrufs an das gerufene Endgerät gesendet.

Mittels der Erfindung kann also über das öffentliche Telefonnetz laufende Information über die Teilnehmerschnittstelle hinaus übertragen werden, obwohl das Format der aktuellen Information in den Empfehlungen des öffentlichen Telefonnetzes betreffend der Teilnehmerschnittstelle nicht definiert ist. Zusatzinformation kann in der allgemeinen Signalgabe zusammen mit einem Anruf über die Teilnehmerschnittstelle hinaus an das Endgerät durch Benutzen von geeigneten Separatoren in der Signalgabe übertragen werden.

Mittels der Separatoren kann Zusatzinformation, wie z.B. Ursachenschlüssel, im öffentlichen Telefonnetz übertragen werden, ohne die Bestimmungen des Netzes wesentlich zu verändern. Separatoren können in einem passend gewählten Feld der Signalgabe des Telefonnetzes benutzt werden. Die gewünschte Information oder Kombination von Informationen kann mittels des dem Separator nachfolgenden Zeichens oder einer Zeichensequenz ausgedrückt werden. Diese dem Separator nachfolgende Zeichen können grundsätzlich in einer so großen Anzahl vorhanden sein, wie Felder frei sind in dem Feld der Signalgabemeldung, wo die Information angegeben wird. Mittels dieser Zeichen und der Kombinationen derselben kann prinzipiell eine sehr große Menge verschiedener Informationen angegeben werden.

Die bei dem erfindungsgemäßen Verfahren mittels Separatoren angegebene Information kann unmittelbar vom Endgerät genutzt werden. Die Information kann im Endgerät weiter in eine gewünschte Sprache umgeändert und dem Benutzer oder dem Anwenderprogramm vorzugsweise in Realzeit übermittelt werden.

## Patentansprüche

1. Verfahren zur Übermittlung von Zusatzinformation in einem Telefonnetz im Zusammenhang mit einer bei einem Anruf zu übermittelnden Signalgabemitteilung, wobei
- Information in mindestens einem Signalgabefeld der Signalgabemeldung gespeichert wird, und
- die Signalgabemeldung im Zusammenhang mit dem Schalten des Anrufs an ein gerufenes Endgerät gesendet wird,
dadurch **gekennzeichnet**, daß
- Zusatzinformation in mindestens einem Signalgabefeld der Signalgabemeldung derart gespeichert wird, daß zumindest das erste Zeichen des Zusatzinformationsteils ein im aktuellen Signalgabefeld in der Übertragung der konventionell zu übertragenden Information unbenutztes Zeichen ist.

2. Verfahren gemäß Patentanspruch 1, dadurch **gekennzeichnet**, daß die Zusatzinformation derart gespeichert wird, daß
- das erste Zeichen des Zusatzinformationsteils ein Separatorzeichen ist,
- jedes nachfolgende Zeichen des Zusatzinformationsteils ein Schlüsselzeichen ist,
- das Separatorzeichen ein im aktuellen Signalgabefeld in der Übertragung von konventionell zu übertragender Information unbenutztes Zeichen ist, und
- jedes Schlüsselzeichen ein beliebiges zu übertragendes Zeichen im aktuellen Signalgabefeld ist.

3. Verfahren gemäß Patentanspruch 1 oder 2, dadurch **gekennzeichnet**, daß Zusatzinformation in mindestens einem solchen Signalgabefeld der Signalgabemeldung gespeichert wird, in dem auch in der Signalgabe konventionell verwendete Information gespeichert ist.

4. Verfahren gemäß Patentanspruch 1 oder 2, dadurch **gekennzeichnet**, daß Zusatzinformation in mindestens einem solchen Signalgabefeld der Signalgabemeldung gespeichert wird, in dem keine andere Information gespeichert ist.

5. Verfahren gemäß einem der Patentansprüche 1 - 3, dadurch **gekennzeichnet**, daß Zusatzinformation im B-Teilnehmernummernfeld der Signalgabemeldung gespeichert wird.

6. Verfahren gemäß Patentanspruch 2 und 5, dadurch **gekennzeichnet**, daß
- das Separatorzeichen nach der B-Teilnehmernummer gespeichert wird,
- als Separatorzeichen ein Buchstabenzeichen benutzt wird, und
- die Zusatzinformation als ein oder als eine Mehrzahl von Nummern- oder Buchstabenzeichen verschlüsselt nach dem Separatorzeichen gespeichert wird.

7. Verfahren gemäß einem der Patentansprüche 1 - 6, dadurch **gekennzeichnet**, daß im Endgerät ein Zeichen oder eine Zeichensequenz des Zusatzinformationsteils empfangen und interpretiert wird.

8. Verfahren gemäß einem der Patentansprüche 1 - 7 benutzt im Zusammenhang mit einer Rufweiterschaltung, dadurch **gekennzeichnet**, daß die Zusatzinformation eine an ein neues Zielendgerät zu übermittelnde Information des weitergeschalteten Rufs über die Ursache der Rufweiterschaltung umfaßt.

9. In der Signalgabe des Telefonnetzes benutztes und an ein am Telefonnetz angeschlossenes Endgerät zu übertragendes Signal, umfassend
- mindestens ein Signalgabefeld zum Speichern von in der Signalgabepraxis des Telefonnetzes definierter Information in diesem Feld im Zeichenformat,
dadurch **gekennzeichnet**, daß es
- mindestens ein solches in mindestens einem Signalgabefeld gespeichertes in der Signalgabe des Telefonnetzes verwendetes Zeichen umfaßt, das so gewählt ist, daß es ein anderes als das Zeichen ist, das in der Übertragung von konventionell zu übertragender Information im aktuellen Signalgabefeld gemäß der Signalgabepraxis des Telefonnetzes verwendet wird.

10. Signal gemäß Patentanspruch 9, dadurch **gekennzeichnet**, daß das im Signalgabefeld gespeicherte andere Zeichen als das, das in der Übertragung von konventionell zu übertragender Information im aktuellen Signalgabefeld gemäß der Signalgabepraxis des Telefonnetzes verwendet wird, ein kombiniertes Separator- und Schlüsselzeichen ist.

11. Signal gemäß Patentanspruch 9, dadurch **gekennzeichnet**, daß das im Signalgabefeld gespeicherte erste andere Zeichen als das, das in der Übertragung von konventionell zu übertragender Information im aktuellen Signalgabefeld gemäß der Signalgabepraxis des Telefonnetzes verwendet wird, ein Separatorzeichen ist.

12. Signal gemäß Patentanspruch 11, dadurch **gekennzeichnet**, daß
- das Separatorzeichen in einem solchen Signalgabefeld gespeichert ist, das gemäß der Signalgabepraxis des Telefonnetzes nur als Nummernzeichen dargestellte Information umfaßt, und
- das Separatorzeichen ein anderes in der Signalgabepraxis verwendetes Zeichen als Nummernzeichen ist.

13. Signal gemäß Patentanspruch 12, dadurch **gekennzeichnet**, daß das das Separatorzeichen umfassende Signalgabefeld eine Nummernzeichensequenz vor dem Separatorzeichen im Signalgabefeld und mindestens ein Zeichen, in welchem Zusatzinformation verschlüsselt ist, nach dem Separatorzeichen umfaßt.
